# EUROPÄISCHE PATENTSCHRIFT

(11) **EP 3 318 378 B1**
(45) Veröffentlichungstag und Bekanntmachung des Hinweises auf die Patenterteilung: **18.09.2019**
(21) Anmeldenummer: 17199881.8
(22) Anmeldetag: 03.11.2017
(51) Int. Cl.: B27D 5/00, B29C 63/04

(54) **VERFAHREN ZUR BESCHICHTUNG UNSTETER OBERFLÄCHEN SOWIE BAUELEMENT**
METHOD FOR COATING DISCONTINUOUS SURFACES AND CONSTRUCTION ELEMENT
PROCÉDÉ DE REVÊTEMENT DE SURFACES DISCONTINUES AINSI QU'ÉLÉMENT DE CONSTRUCTION

(30) Priorität: 03.11.2016 DE 102016221577
(43) Veröffentlichungstag der Anmeldung: 09.05.2018
(73) Patentinhaber: HOMAG GmbH, 72296 Schopfloch (DE)
(72) Erfinder: Schmid, Johannes, 72181 Starzach (DE)
(74) Vertreter: Hoffmann Eitle

(56) Entgegenhaltungen:
- EP-A1- 2 918 392
- EP-A1- 3 090 857
- EP-A2- 0 531 261
- DE-A1-102009 036 036
- DE-U- 7 320 854
- DE-U1- 29 904 124

## Beschreibung

### Technisches Gebiet

Die vorliegende Erfindung betrifft ein Verfahren zur Beschichtung unsteter Oberflächen eines Werkstücks gemäß dem Oberbegriff des Anspruchs 1, sowie ein Bauelement mit Beschichtung gemäß dem Oberbegriff des Anspruchs 10. Ein solches Verfahren und ein solches Bauelement sind aus der EP 3 090 857 A1 bekannt. Derartige Oberflächen kommen beispielsweise im Bereich der Möbel- bzw. Bauelementeindustrie vor.

### Stand der Technik

Im Stand der Technik ist es bekannt, ein streifen- oder bandförmiges Beschichtungsmaterial mit einem Haftmittel zu versehen und bspw. an einer Schmalseite eines Werkstücks aufzubringen. Falls die zu beschichtende Oberfläche unstet ausgebildet ist, also rein beispielhaft Kanten oder Ecken umfasst, kann ein relativ dünnes Beschichtungsmaterial verwendet werden, um dieses an die vorgegebene Oberfläche anzupressen und somit um eine Kante oder Ecke zu biegen. Allerdings haben derart dünne Beschichtungsmaterialen den Nachteil, dass diese gerade im Bereich der Kanten aufgrund der genannten Bearbeitung vergleichsweise stoßempfindlich sind.

Ferner verbleiben bei den genannten Beschichtungsmaterialien, die kurz vor der Aufbringung an einem Werkstück mit einem Haftmittel versehen werden, Haftmittelreste und eine Fuge zwischen dem eigentlichen Beschichtungsmaterial und dem zu beschichtenden Werkstück ist sichtbar.

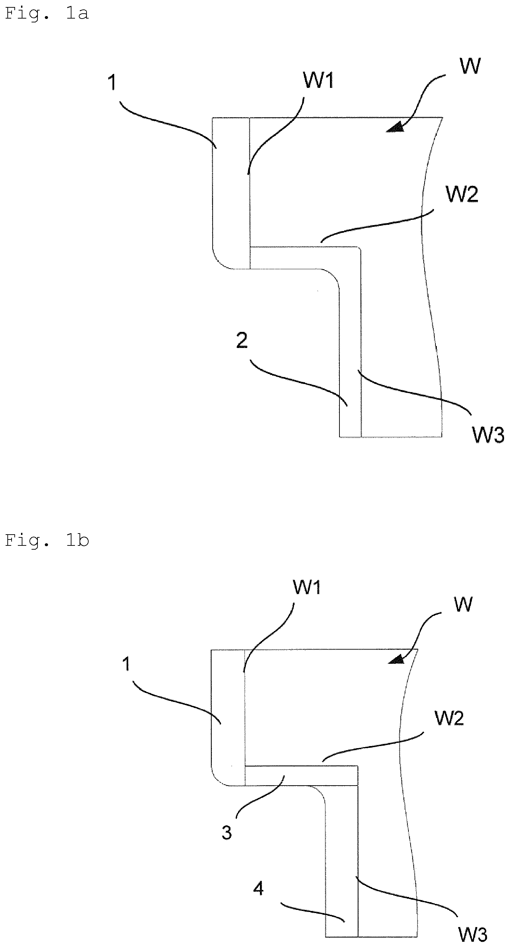

Bei der Beschichtung von vergleichsweise komplizierten Geometrien sind ferner die in Fig. 1a und 1b dargestellten Varianten bekannt. In Fig. 1a wird eine erste Werkstückseite W1 eines Werkstücks W mit einem ersten Beschichtungsmaterial 1 versehen, welches Beschichtungsmaterial 1 über die zu einer zweiten Werkstückseite W2 vorliegende und zu beschichtende Kante hervorsteht. Die zweite Werkstückseite W2 und eine gegenüber der zweiten Werkstückseite W2 rechtwinklig angeordnete Werkstückseite W3 des Werkstücks W wird mit einem zweiten Beschichtungsmaterial 2 beschichtet, welches abschnittsweise durch den überlappenden Bereich des ersten Beschichtungsmaterials 1 verdeckt wird.

In Fig. 1b wird eine sogenannte 3-Streifentechnik dargestellt, bei der insgesamt drei Beschichtungsmaterialien verwendet werden. Insbesondere werden die parallelen Seiten des Werkstücks W mit Beschichtungsmaterialien 1, 4 versehen, während die hierzu senkrecht angeordnete zweite Werkstückseite W2 mit einem weiteren Beschichtungsmaterial 3 versehen ist, welches abschnittsweise vom Beschichtungsmaterial 1 und vom Beschichtungsmaterial 4 verdeckt wird.

Die geschilderten Beschichtungsverfahren weisen die gemeinsamen Probleme auf, dass zwischen den einzelnen Beschichtungsmaterialien 1 bis 4 Fugen verbleiben, die eine ansprechende, hochwertige Optik stören und ferner die einzeln aufgeleimten Beschichtungsmaterialien dazu neigen, über die Lebensdauer des beschichteten Produkts sich von der Kante abzulösen.

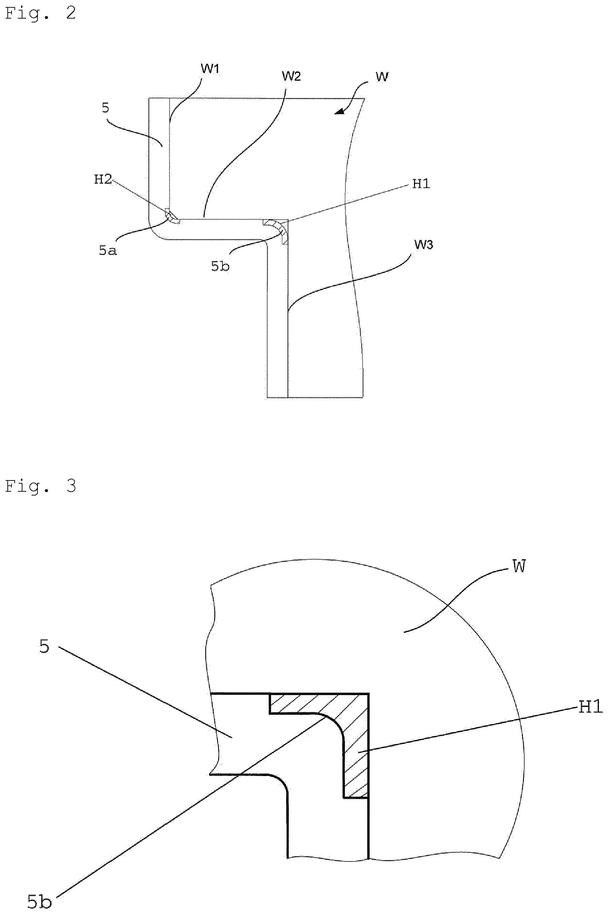

Um die genannten Probleme auszuräumen, wird jüngst eine sogenannte Nullfugen-Strategie verfolgt. Darunter ist zu verstehen, dass bei einer Kantensituation, wie es in den Fig. 1a und 1b geschildert ist, lediglich ein Beschichtungsmaterial verwendet wird, um alle drei Werkstückseiten W1 bis W3 zu beschichten. Dies bietet den Vorteil, dass lediglich zwei Sichtfugen an den beiden Enden des Beschichtungsmaterials vorhanden sind, und nicht wie beispielsweise bei dem in Fig. 1b dargestellten Beschichtungsverfahren vier Sichtfugen. In Fig. 2 ist eine derartige Beschichtung gezeigt.

Wie der Fig. 2 entnommen werden kann, wird das Beschichtungsmaterial bevorzugt mit Schwächungsbereichen 5a, 5b versehen, die beispielhaft an den beiden Übergangsabschnitten zwischen den Werkstückseiten W1, W2 und W2, W3 positioniert sind. Die Schwächungsbereiche 5a, 5b ermöglichen es, dass das Beschichtungsmaterial leichter an unsteten Oberflächen eines Werkstücks, wie Ecken und Kanten, geführt und angebracht werden kann. Ein Brechen des Beschichtungsmaterials wird in diesen Bereichen somit verhindert und die Qualität der Beschichtung verbessert. Ferner können vergleichsweise dicke Beschichtungsmaterialien eingesetzt werden. Auf diese Weise kann die Wertigkeit des beschichteten Bauteils erhöht werden.

Wie die Fig. 2 und insbesondere die Fig. 3, die eine vergrößerte Ansicht der Fig. 2 ist, zeigen, entstehen bei derartigen Beschichtungen Hohlräume H1, H2 zwischen dem Werkstück W und dem Beschichtungsmaterial 5. Aufgrund der vorgesehenen Schwächungsbereiche 5a, 5b werden die Hohlräume H1, H2 weiter vergrößert. In den dadurch entstehenden Hohlräumen H1, H2 kann sich Feuchtigkeit zwischen dem Beschichtungsmaterial und dem Werkstück W ansammeln, was zu Farbveränderungen des Beschichtungsmaterials sowie einer Ablösung des Beschichtungsmaterials vom Werkstück W führen kann.

Die EP 3 090 857 A1 beschreibt ein Beschichtungsmaterial, insbesondere Schmalflächenbeschichtungsmaterial, zur Beschichtung einer unsteten Oberfläche eines Werkstücks, sowie ein Verfahren. Das Beschichtungsmaterial weist dabei zumindest einen Schwächungsbereich auf.

Aus der DE 299 04 124 U1 ist eine Verbundplatte mit dekorativer Schichtpressstoffplatte bekannt.

### Gegenstand der Erfindung

Ziel der vorliegenden Erfindung ist es, ein Verfahren zur Beschichtung unsteter Oberflächen eines Werkstücks um Werkstücke mit unsteten Oberflächen auf effiziente Weise und qualitativ hochwertig beschichten zu können. Die Aufgabe wird gelöst durch ein Verfahren nach Anspruch 1 sowie ein Bauelement nach Anspruch 10. Bevorzugte Weiterbildungen der Erfindung sind in den abhängigen Ansprüchen angegeben.

Einer der Kerngedanken der vorliegenden Erfindung ist es, an einem Übergangsabschnitt zweier Werkstückseiten eines Werkstücks, welche insbesondere winkelig zueinander angeordnet sind, und an dem zumindest ein Schwächungsbereich eines Beschichtungsmaterials positioniert wird, derart eine spanende Bearbeitung durchzuführen, um den Schwächungsbereich des Beschichtungsmaterials zumindest teilweise auszufüllen. Mittels dem vorgeschlagenen Verfahren ist es auf einfache und effiziente Weise möglich, Hohlräume zwischen einem Werkstück und einem Beschichtungsmaterial, insbesondere in Übergangsabschnitten zwischen zwei Werkstückseiten, welche insbesondere winkelig zueinander angeordnet sind, und an denen Schwächungsbereiche des Beschichtungsmaterials positioniert sind, zu vermeiden. Auf diese Weise ist es möglich, die Ansammlung von Feuchtigkeit zwischen dem Beschichtungsmaterial und dem Werkstück zu verhindern, und somit eine qualitativ hochwertige Beschichtung über die Lebensdauer eines Produkts zu gewährleisten. Hierdurch kann auch die Druckbelastbarkeit des Übergangsabschnitts zwischen den Werkstückseiten verbessert bzw. erhöht werden. Ferner bietet das vorgeschlagene Verfahren den Vorteil, dass an Verbindungsecken eine Fasengeometrie einer vorhandenen Querbeschichtung mit der zusätzlichen Längsbeschichtung so gestaltet werden kann, dass sie übereinander liegen, ohne jegliche Profilerhöhung. Hiermit kann eine Gärung zwischen diesen optisch (vollständig) geschlossen werden. Es kann somit eine störende Gärungsfuge vermieden werden.

Gemäß der vorliegenden Erfindung weist das Verfahren zur Beschichtung unsteter Oberflächen eines Werkstücks, insbesondere eines Werkstücks, das bevorzugt zumindest abschnittsweise aus Holz, Holzwerkstoffen oder Holzersatzwerkstoffen besteht, die Schritte auf: Zuführen eines Beschichtungsmaterials, wobei das Beschichtungsmaterial zumindest einen Schwächungsbereich aufweist, Aufbringen des Beschichtungsmaterials an mindestens zwei Werkstückseiten, welche insbesondere winklig zueinander angeordnet sind, wobei der zumindest eine Schwächungsbereich im Übergangsabschnitt der mindestens zwei Werkstückseiten, insbesondere im Bereich einer Innenecke, positioniert wird, und wobei der Übergangsabschnitt der mindestens zwei Werkstückseiten derart ausgestaltet ist, um den Schwächungsbereich des Beschichtungsmaterials zumindest teilweise auszufüllen.

Gemäß des Verfahrens der vorliegenden Erfindung wird eine Verbindungsecke des Werkstücks W anhand von zwei Beschichtungsmaterialien, insbesondere anhand einer Längsbeschichtung und einer Querbeschichtung, beschichtet, wobei die Verbindungsecke eine Längsseite und eine Querseite aufweist, die bevorzugt rechtwinkelig zueinander angeordnet sind, und jeweils mindestens zwei Werkstückseiten aufweisen, welche insbesondere rechtwinkelig zueinander angeordnet sind, dass eine der beiden Werkstückseiten der Querseite identisch ist mit einer der beiden Werkstückseiten der Längsseite, mindestens ein Übergangsabschnitt der beiden Seiten mit einer Fase und/oder einem gekrümmten Abschnitt ausgebildet ist, insbesondere einer Fase im Winkel von 45°, und beide Beschichtungsmaterialien, in der Verlängerung des Übergangsabschnitts derart eine komplementäre Fase und/oder einen gekrümmten Abschnitt aufweisen, dass sie ohne Profilerhöhung übereinander liegen.

Auf diese Weise kann eine Verbindungsecke eines Werkstücks, insbesondere einer Tür, bereitgestellt werden, bei der eine Fasengeometrie der Querbeschichtung mit der Längsbeschichtung übereinander liegt, ohne dass eine störende Profilerhöhung entsteht. Hiermit kann die Gärung optisch (vollständig) geschlossen werden. Es kann somit eine störende Gärungsfuge vermieden werden.

Eine unstete Oberfläche im Sinne der vorliegenden Erfindung bezieht sich bspw. auf eine aus verschiedenen Werkstückseiten zusammengesetzte Oberfläche, welche Werkstückseiten insbesondere winklig und/oder über einen oder mehrere Radien ineinander übergehen. Beispiele unsteter Oberflächen sind eine Ecke oder eine Kante an einem insbesondere plattenförmigen Werkstück. Insbesondere kann eine Schmalseite eine Ecke und/oder Kante aufweisen. Derartige Oberflächen treten beispielsweise im Bereich eines Türfalzes auf.

Ferner kann das im Rahmen der vorliegenden Erfindung beschriebene Verfahren sowohl im Bereich der Stationärtechnik als auch im Bereich der Durchlauftechnik eingesetzt werden. Die zu bearbeitenden Werkstücke sind insbesondere plattenförmig, und weisen beispielsweise eine oder mehrere Kanten bzw. Ecken, und somit eine unstete Oberfläche, auf, wie diese beispielsweise bei einem Türfalz vorliegen.

Im Bereich der Stationärtechnik wird ein Werkstück beispielsweise mittels Saugspannern oder Klemmvorrichtungen gehalten und ein Beschichtungsaggregat wird mit einer Andruckrolle oder Andruckschuh relativ zum gehaltenen Werkstück bewegt. Im Falle eines Durchlaufverfahrens hingegen wird das Werkstück relativ zu einem Beschichtungsaggregat bewegt.

Auf diese Weise wird ein Verfahren zur Beschichtung unsteter Oberflächen eines Werkstücks bereitgestellt, bei dem trotz der Verwendung von vergleichsweise dicken Beschichtungsmaterialien, anhand deren die Wertigkeit des beschichteten Bauteils erhöht werden kann, und der dadurch notwendig werdenden Schwächungsbereiche, Hohlräume zwischen dem Werkstück und dem Beschichtungsmaterial vermieden werden können. Die für gewöhnlich entstehenden Hohlräume können durch die entsprechende Gestaltung des Übergangsabschnitts zwischen den mindestens zwei Werkstückseiten ausgefüllt bzw. vermieden werden.

Gemäß einer Ausführungsform der vorliegenden Erfindung weist der Übergangsabschnitt eine Fase und/oder einen gekrümmten Abschnitt mit einem Absatz.

Das dadurch bereitgestellte Verfahren ist insbesondere in der Lage, anhand einfacher Bearbeitungsvorgänge, wie beispielsweise eine spanende Bearbeitung, Fasen und/oder gekrümmte Abschnitte an Übergangsabschnitten eines Werkstücks vorzusehen, die derart ausgebildet sind, dass sie den Schwächungsbereich des Beschichtungsmaterials und den dadurch entstehenden Hohlraum zwischen Beschichtungsmaterial und Werkstück zumindest teilweise ausfüllen.

Ferner ist bevorzugt die Größe der Fase und/oder des gekrümmten Abschnitts von der Dicke des Beschichtungsmaterials abhängig. D.h., wird ein dickeres Beschichtungsmaterial zur Beschichtung des Werkstücks genutzt, weist dieses in der Regel größere, insbesondere tiefere Schwächungsbereich auf, weshalb der Übergangsabschnitt des Werkstücks mit einer größeren Fase bzw. einem größeren gekrümmten Abschnitt versehen wird. Durch die größere Ausbildung der Fase, kann diese weiter in den Schwächungsbereich des Beschichtungsmaterials hineinstehen und diesen somit weiter ausfüllen.

Gemäß einer bevorzugten Ausführungsform der vorliegenden Erfindung ist der zumindest eine Schwächungsbereich eine Aussparung, die im Querschnitt des Beschichtungsmaterials betrachtet insbesondere v-förmig, w-förmig, rechtwinklig oder halbkreisförmig ausgeformt ist, und/oder der Schwächungsbereich durch eine Vielzahl von Schlitzen oder Sacklöchern im Beschichtungsmaterial ausgebildet ist, wobei der Schwächungsbereich insbesondere zumindest annähernd komplementär zu dem Übergangsabschnitt ausgebildet ist.

Auf diese Weise kann die Dicke des Beschichtungsmaterials abschnittsweise reduziert und somit in diesem Bereich die Biegsamkeit des Beschichtungsmaterials erhöht werden. Ferner kann im Falle einer zumindest annähernd komplementären Ausbildung des Schwächungsbereichs zum Übergangsabschnitt, insbesondere komplementär zu der Fase und/oder dem gekrümmten Abschnitt des Übergangsabschnitts, der Schwächungsbereich des Beschichtungsmaterials noch weiter ausgefüllt werden, bevorzugt annährend vollständig ausgefüllt werden, und somit können Hohlräume zwischen dem Werkstück und dem Beschichtungsmaterial noch besser vermieden werden.

Alternativ oder gleichzeitig ist der Schwächungsbereich als poröser Bereich einer Trägerschicht des Beschichtungsmaterials ausgebildet, um die Biegsamkeit des Beschichtungsmaterials entsprechend abschnittsweise zu erhöhen. Insbesondere kann es sich um eine Mikroporosierung der Trägerschicht handeln.

Bevorzugt wird ein Beschichtungsmaterial bereitgestellt, welches Beschichtungsmaterial, insbesondere Schmalflächenbeschichtungsmaterial, zur Beschichtung einer unsteten Oberfläche eines Werkstücks, wie beispielsweise einem Türfalz, insbesondere winklig zueinander angeordneten Werkstückseiten, vorgesehen ist. Das Beschichtungsmaterial umfasst eine Trägerschicht sowie eine aktivierbare oder reaktivierbare Haftschicht. Ferner weist das Beschichtungsmaterial zumindest einen Schwächungsbereich auf. Beispielsweise kann es sich um ein streifen- oder bandförmiges Beschichtungsmaterial handeln, welches an einer Schmalseite oder einer Breitseite eines bevorzugt plattenförmigen Werkstücks angebracht werden kann.

In einer Ausführungsform ist das Beschichtungsmaterial ein koextrudiertes Beschichtungsmaterial, wobei insbesondere die Trägerschicht und die Haftschicht koextrudiert sind, oder die Trägerschicht des Beschichtungsmaterials mit einer Haftschicht versehen wird.

In weiteren Ausführungsformen ist die Trägerschicht des Beschichtungsmaterials zumindest abschnittsweise aus PVC, Polystyrol, insbesondere aus ABS, aus PP, PE, Polycarbonat und/oder Polymethylmetacrylat (PMMA) als HPL, CPL, Melaminpapier oder als Furnier, oder eine Kombination hiervon, ausgebildet.

Ferner ist es bevorzugt, dass die Haftschicht des Beschichtungsmaterials Farbpigmente aufweist, und bevorzugt dieselbe Farbe besitzt wie die Trägerschicht, um die Farbgebung der Haftschicht auf diejenige der Trägerschicht abzustimmen.

Bevorzugt weist das Beschichtungsmaterial eine Dicke von mindestens 0,5 mm - 4 mm, bevorzugt 0,7 - 4 mm, weiter bevorzugt 1,5 mm - 4 mm, auf, wobei die Haftschicht insbesondere eine Dicke von 0,1 - 0,3 mm umfasst. Aufgrund des Schwächungsbereichs und der besonderen Ausgestaltung des Übergangsabschnitts können somit auch Beschichtungsmaterialien mit vergleichsweise großer Dicke eingesetzt werden, ohne dass große Hohlräume zwischen dem Werkstück und dem Beschichtungsmaterial entstehen.

In einer Ausführungsform des Verfahrens wird der zumindest eine Schwächungsbereich während des Zuführens des Beschichtungsmaterials und/oder während des Aufbringens des Beschichtungsmaterials am Werkstück eingebracht. Somit wird die Flexibilität des Verfahrens weiter erhöht und die Positioniergenauigkeit des Schwächungsbereichs verbessert. Bevorzugt weist das Beschichtungsmaterial eine Trägerschicht und eine Haftschicht auf, wobei der Schwächungsbereich vor Aufbringen der Haftschicht an der Trägerschicht oder nach Aufbringen der Haftschicht an der Trägerschicht eingebracht wird.

Wird der Schwächungsbereich vor dem Aufbringen der aktivierbaren oder reaktivierbaren Haftschicht eingebracht, kann die im Nachgang aufzubringende Haftschicht speziell auf den bereits vorliegenden Schwächungsbereich abgestimmt aufgebracht werden. Der Verfahrensablauf kann dabei innerhalb einer Maschine durchgeführt werden.

Alternativ wird, wie zuvor erläutert, der Schwächungsbereich nach Aufbringen der Haftschicht an der Trägerschicht eingebracht. Somit wird ein bereits einsatzfähiges Beschichtungsmaterial vorrätig gehalten, beispielsweise in Form eines Wickels, und der Schwächungsbereich in dieses eingebracht. Dabei ist es bevorzugt, dass das Beschichtungsmaterial zugeführt wird, und beispielsweise in einer Beschichtungsmaschine zumindest ein Schwächungsbereich eingebracht wird. Auf diese Weise wird die Flexibilität weiter erhöht.

Ferner wird nachfolgend eine Vorrichtung beschrieben. Die Vorrichtung selbst ist nicht Teil der Erfindung. Allerdings dient die Beschreibung der Vorrichtung dem besseren Verständnis des erfindungsgemäßen Verfahrens. Die Vorrichtung ist zur Beschichtung einer unsteten Oberfläche eines Werkstücks vorgesehen, insbesondere eines Werkstücks, das bevorzugt zumindest abschnittsweise aus Holz, Holzwerkstoffen oder Holzersatzwerkstoffen besteht, unter Durchführung des obig beschriebenen Verfahrens. Die Vorrichtung weist auf: eine erste Zuführeinrichtung, durch die ein an einem Werkstück aufzubringendes Beschichtungsmaterial zugeführt wird, wobei das Beschichtungsmaterial zumindest einen Schwächungsbereich aufweist, eine Fügeeinrichtung für das Aufbringen des Beschichtungsmaterials an mindestens zwei Werkstückseiten des Werkstücks, welche insbesondere winklig zueinander angeordnet sind, wobei der zumindest eine Schwächungsbereich im Übergangsabschnitt der mindestens zwei Werkstückseiten, insbesondere im Bereich einer Innenecke, positioniert wird, und eine zweite Zuführeinrichtung, durch die das Werkstück zugeführt wird und wobei der Übergangsabschnitt der zwei Werkstückseiten des zugeführten Werkstücks derart ausgestaltet ist, um den Schwächungsbereich des Beschichtungsmaterials, der im Übergangsabschnitt positioniert ist, während des Aufbringens des Beschichtungsmaterials zumindest teilweise auszufüllen.

Des Weiteren kann die Vorrichtung eine Trennvorrichtung aufweisen, durch die der Übergangsabschnitt der zweie Werkstückseiten des Werkstücks, welche insbesondere winkelig zueinander angeordnet sind, derart trennend, insbesondere spanend, bearbeitbar ist, um den Schwächungsbereich des Beschichtungsmaterials, der im Übergangsabschnitt positioniert ist, zumindest teilweise auszufüllen.

Ferner kann die Vorrichtung eine Einrichtung zum Einbringen des Schwächungsbereichs in das aufzubringende Beschichtungsmaterial aufweisen, wobei der mindestens eine Schwächungsbereich durch Trennen, wobei das Trennen bevorzugt spanend, insbesondere mittels eines Fräsers, einer Säge, eines Schabwerkzeugs, eines Schleifbands, und/oder durch Zerteilen, insbesondere mittels eines Messers oder einer oder mehrerer Nadeln, und/oder durch Abtragen, insbesondere durch thermisches Trennen, Ätzen oder elektrochemisches Abtragen in das aufzubringende Beschichtungsmaterial einbringbar ist.

Hierdurch wird insbesondere die Dicke der Trägerschicht des Beschichtungsmaterials abschnittsweise reduziert und somit in diesem Bereich die Biegsamkeit des Beschichtungsmaterials erhöht. Ferner kann dadurch gezielt die Form des Schwächungsbereichs an die Form des Übergangsabschnitts angepasst werden und dadurch der Hohlraum zwischen Beschichtungsmaterial und Werkstück minimiert werden.

Alternativ oder zusätzlich kann der Schwächungsbereich durch Umformen, insbesondere mittels einer Prägewalze oder eines Stempels, im Beschichtungsmaterial eingebracht werden. Somit wird insbesondere die Dicke der Trägerschicht des Beschichtungsmaterials abschnittsweise verringert und somit in diesem Bereich die Biegsamkeit des Beschichtungsmaterials erhöht. Ferner wird für den Fall, dass der Schwächungsbereich ausgehend von der Haftschicht des Beschichtungsmaterials eingebracht wird die Haftschicht weitestgehend erhalten.

Dabei kann der Schwächungsbereich ausgehend von der Haftschicht oder ausgehend von der Trägerschicht in das Beschichtungsmaterial eingebracht sein oder werden. Somit können die Anforderungen an das Beschichtungsmaterial konkret auf die Gegebenheiten des Werkstücks und den Verlauf der Werkstückseiten abgestimmt werden.

Gemäß einer Ausführungsform der Vorrichtung wird ein Aktivieren einer Haftschicht des Beschichtungsmaterials während einer Relativbewegung zwischen Beschichtungsmaterial und Werkstück durchgeführt, wobei die Aktivierung durch eine Energiequelle durchgeführt wird, die insbesondere ausgewählt ist aus Laser, Heißluftquelle, Infrarotquelle, Ultraschallquelle, Magnetfeldquelle, Mikrowellenquelle, Plasmaquelle, LED-Quelle und/oder Begasungsquelle.

Des Weiteren kann die Trennvorrichtung derart ausgebildet sein, dass der Übergangsabschnitt derart trennend bearbeitbar ist, dass der Übergangsabschnitt eine Fase und/oder einen gekrümmten Abschnitt aufweist, wobei insbesondere nach ausbilden der Fase und/oder des gekrümmten Abschnitts noch ein Absatz an dem Übergangsabschnitt anbringbar ist.

Die vorliegende Erfindung betrifft ferner ein Bauelementmit den Merkmalen des unabhängigen Anspruchs 10.

Auf diese Weise wird ein Bauelement, insbesondere eine Türe, bereitgestellt, bei dem trotz der Verwendung von vergleichsweise dicken Beschichtungsmaterialien, anhand deren die Wertigkeit des beschichteten Bauelements erhöht werden kann, und des dadurch notwendig werdenden Schwächungsbereichs, Hohlräume zwischen dem Werkstück und dem Beschichtungsmaterial vermieden werden können. Die für gewöhnlich entstehenden Hohlräume können durch die entsprechende Gestaltung des Übergangsabschnitts zwischen den mindestens zwei Werkstückseiten ausgefüllt bzw. vermieden werden.

### Kurze Beschreibung der Zeichnungen

Fig. 1a, 1b zeigen schematisch bekannte Beschichtungsverfahren,
Fig. 2 zeigt schematisch ein weiteres bekanntes Beschichtungsverfahren,
Fig. 3 zeigt einen Ausschnitt eines Übergangsabschnitts des in Fig. 2 dargestellten Beschichtungsverfahrens,
Fig. 4 zeigt schematisch einen Übergangsabschnitt eines Beschichtungsverfahrens, der im Rahmen der Erfindung zum Einsatz kommen kann,
Fig. 5 zeigt schematisch einen Übergangsabschnitt eines Beschichtungsverfahrens, der im Rahmen der Erfindung zum Einsatz kommen kann,
Fig. 6 zeigt eine Fasengeometrie einer Verbindungsecke (Gärung) gemäß dem Stand der Technik
Fig. 7 zeigt eine Fasengeometrie einer Verbindungsecke (Gärung) gemäß einer Ausführungsform der vorliegenden Erfindung,
Fig. 8 zeigt schematisch den Querschnitt eines Beschichtungsmaterials, das beim erfindungsgemäßen Verfahren zum Einsatz kommen kann,
Fig. 9 zeigt eine Vorrichtung zur Durchführung des erfindungsgemäßen Beschichtungsverfahrens
Fig. 10 zeigt eine alternative Vorrichtung zur Durchführung des erfindungsgemäßen Beschichtungsverfahrens

### Detaillierte Beschreibung der bevorzugten Ausführungsformen

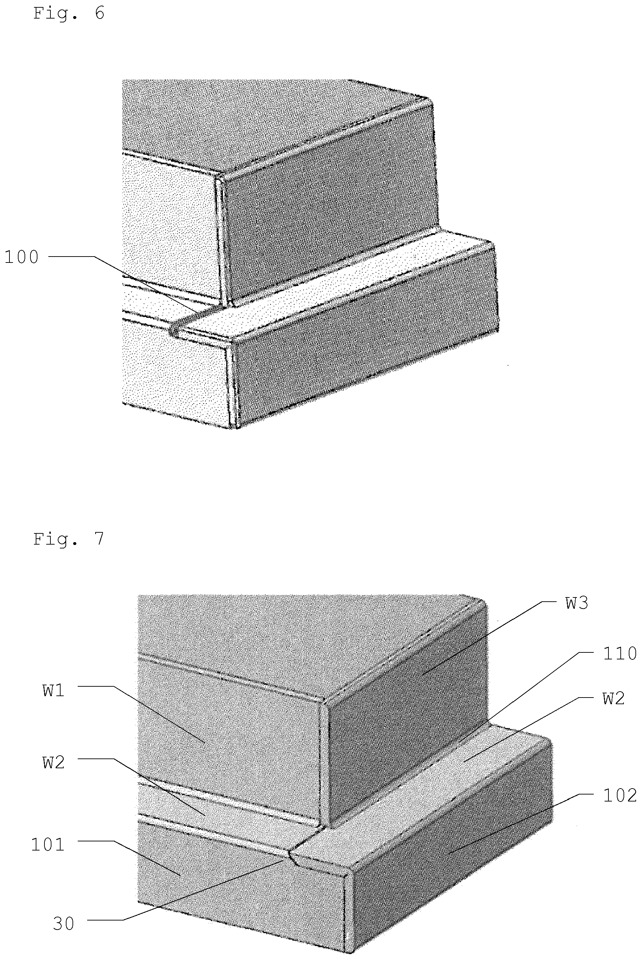

Nachfolgend wird anhand der beigefügten Figuren eine bevorzugte Ausführungsform der vorliegenden Erfindung im Detail beschrieben. Weitere in diesem Zusammenhang genannte Modifikationen bestimmter Merkmale können jeweils einzeln miteinander kombiniert werden, um neue Ausführungsformen auszubilden. Insbesondere wird in Fig. 7 eine Ausführungsform der Erfindung dargestellt, wobei hierbei Beispiele wie in den Figuren 3-4 zum Einsatz kommen können.

Im Rahmen der vorliegenden Erfindung kommen bevorzugt Beschichtungsmaterialien 10 zum Einsatz, welche vorbeschichtet sind. Hierbei kann es sich um koextrudierte Beschichtungsmaterialien 10 handeln, bei denen die Trägerschicht 13 (Dekorschicht) zusammen mit der Haftschicht 14 hergestellt wird. Ferner kann es sich um Beschichtungsmaterialien handeln, bei denen zunächst die Trägerschicht 13 bspw. im Extrusionsverfahren hergestellt und diese Trägerschicht anschließend, ggf. örtlich und zeitlich getrennt von der Herstellung der Trägerschicht 13, mit einer aktivierbaren oder reaktivierbaren Haftschicht 14 versehen wird. Die Trägerschicht (13) kann ferner eine (dickere) Kernschicht (13a) aufweisen, die aus möglichst kostengünstigen Material hergestellt werden kann.

Ferner ist es bevorzugt, dass die Haftschicht 14 mit Farbpigmenten versehen ist, um die Farbgebung der Haftschicht 14 an diejenige der Trägerschicht 13 anzupassen. Somit ist die Haftschicht 14 nach Aufbringung des Beschichtungsmaterials 10 an einem Werkstück nicht oder nur kaum optisch wahrnehmbar, ohne die Dicke der Haftschicht 14 zu verringern.

Derartige Beschichtungsmaterialien 10 werden vor der Aufbringung an einem Werkstück mittels einer Energiequelle aktiviert, um die Haftschicht 14 in einen Zustand zu versetzen, in dem diese eine adhäsive Wirkung entfaltet. Zur Aktivierung der Haftschicht 14 kann insbesondere ein Laser, eine Heißluftquelle, eine Infrarotquelle, eine Ultraschallquelle, eine Magnetfeldquelle, eine Mikrowellenquelle, eine Plasmaquelle, LED-Quelle und/oder eine Begasungsquelle zum Einsatz kommen, wobei bei bestimmtem Beschichtungsmaterialien 10 ggf. mehrere der genannten Energiequellen in Kombination miteinander verwendet werden können.

Der Laser ermöglicht dabei eine besonders schnelle Fokussierung auf einen bestimmten Bereich des Beschichtungsmaterials 10. Somit kann mit einem Laser Energie besonderes schnell bereitgestellt werden, wodurch hohe Arbeitsgeschwindigkeiten ermöglicht werden. Eine Heißluftquelle bspw. ist vergleichsweise kostengünstig verfügbar und erfordert einen relativ geringen Wartungsaufwand.

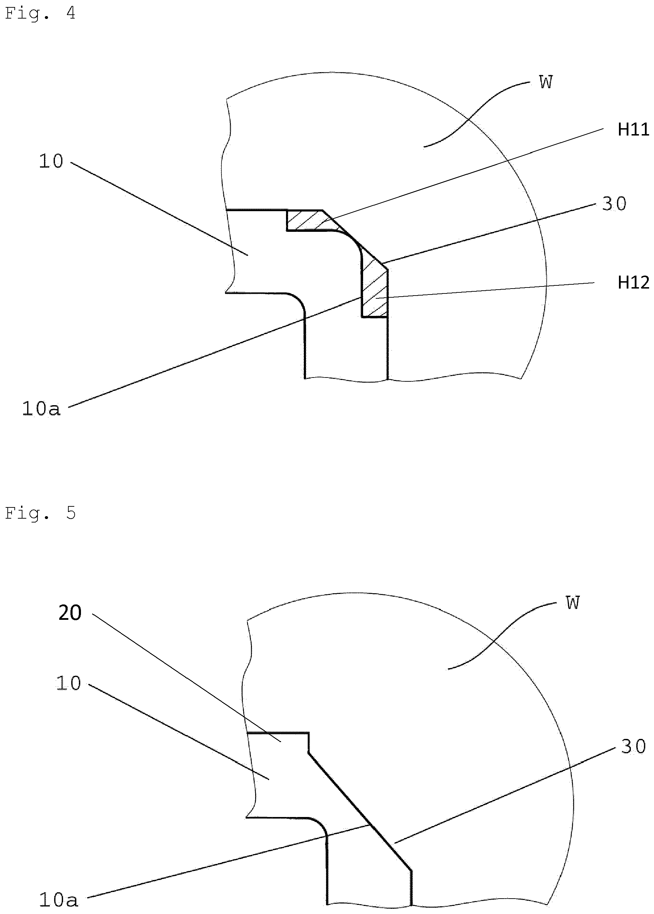

In Fig. 4 ist schematisch ein Übergangsabschnitt zweier Werkstückseiten W2, W3, die beispielhaft einen Winkel von 90° zueinander aufweisen, gezeigt. Die in den Figuren dargestellten Elemente oder Bereiche hiervon sind zur Veranschaulichung teilweise mit größeren Dimensionen dargestellt, um die Zielrichtung der vorliegenden Erfindung deutlicher beschreiben zu können.

Wie der Fig. 4 entnommen werden kann, weist das Beschichtungsmaterial 10 einen Schwächungsbereich 10a auf, der so an dem Beschichtungsmaterial 10 vorgesehen ist, dass er nach erfolgter Beschichtung des Werkstücks W an dem Übergangsabschnitt, insbesondere im Bereich einer Innenecke, positioniert ist. Soweit entspricht das in Fig. 4 dargestellte Beschichtungsverfahren dem in den Fig. 2 und 3 gezeigten, bekannten Beschichtungsverfahren. Um den in Fig. 3 dargestellten Hohlraum H1 zumindest zu verkleinern, weist der Übergangsabschnitt beispielhaft eine Fase 30 zwischen den beiden Werkstückseiten W2 und W3 auf. Hierdurch wird der Hohlraum H1 von Fig. 3 größtenteils vermieden, und es verbleiben lediglich zwei kleinere Hohlräume H11 und H12, welche während der Beschichtung leicht mit Klebstoff ausgefüllt werden können.

Der Schwächungsbereich 10a kann nach Aufbringen einer Haftschicht 14 oder beim genannten Koextrusionsverfahren nach Herstellung des Beschichtungsmaterials 10 eingebracht werden. Hierbei besteht die Möglichkeit, dass der Hersteller des Beschichtungsmaterials 10 Schwächungsbereiche 10a bspw. in gleichmäßigen Abständen am Beschichtungsmaterial 10 vorsieht, um somit in diesen Bereich gezielt eine Schwächung des Beschichtungsmaterials 10 bereitzustellen. Auf diese Weise wird die Flexibilität des Beschichtungsmaterials 10 in diesen Bereichen erhöht.

Alternativ ist es möglich, das Beschichtungsmaterial 10 konkret auf das zu beschichtende Werkstück W, beispielsweise Türfalz, abzustimmen. Hierzu kann das Beschichtungsmaterial 10 an den entsprechenden Positionen mit Schwächungsbereichen 10a versehen werden. Dieser Schritt kann auch erfolgen, bevor das Beschichtungsmaterial 10 zugeschnitten wird, die Positionen der Schwächungsbereiche 10a aufgrund von Informationen über das zu beschichtende Werkstück W jedoch bereits bekannt sind. Auch ist es möglich, die Schwächungsbereiche 10a in ein bereits zugeschnittenes Beschichtungsmaterial 10 einzubringen.

Ferner ist es möglich, den zumindest einen Schwächungsbereich 10a vor Aufbringen der Haftschicht 14 an einer Trägerschicht 13 des Beschichtungsmaterials 10 in dieses einzubringen. Alternativ ist es möglich, den zumindest einen Schwächungsbereich 10a nach Aufbringen der Haftschicht 14 in das Beschichtungsmaterial 10 einzubringen, und zwar entweder ausgehend von der Seite der Trägerschicht 13 (Sichtseite) oder ausgehend von der Seite der Haftschicht 14 (Anbringungsseite/Haftseite).

Alternativ ist es möglich, das Beschichtungsmaterial 10 an eine erste Werkstückseite W1 anzuheften, nachfolgend den mindestens einen Schwächungsbereich 10a an der entsprechenden Position am Beschichtungsmaterial 10 einzubringen und nachfolgend das Beschichtungsmaterial 10 an der/den weiteren zu beschichtenden Werkstückseiten W2, W3, die im vorliegenden Beispiel winklig zur ersten Werkstückseite W1 ausgerichtet sind, anzubringen. Auf diese Weise kann die Flexibilität erhöht und gleichzeitig die Genauigkeit der Positionierung der Schwächungsbereiche 10a weiter verbessert werden.

Wie aus Fig. 2 ersichtlich, kann somit in den Eck- und Kantenbereich, in denen die Werkstückseiten W1-W3 winklig ineinander übergehen, gezielt eine Schwächung des Beschichtungsmaterials 10 eingebracht werden, damit dieses beim Beschichtungsvorgang um die Eck- und Kantenbereiche geführt werden kann.

Die gezeigten Schwächungsbereiche 10a können gemäß einer ersten Variante spanend in das Beschichtungsmaterial 10 eingebracht werden. Hierzu kann bspw. ein Fräser oder ein Sägewerkzeug verwendet werden. Alternativ ist es möglich, die Schwächungsbereiche 10a durch Aufbringung von Druck oder mittels eines Prägewerkzeugs in das Beschichtungsmaterial 10 einzudrücken, sodass bspw. die Trägerschicht 13 des Beschichtungsmaterials 10 im Schwächungsbereich komprimiert wird.

Das Einprägen der Schwächungsbereiche 10a kann bei koextrudierten Beschichtungsmaterialien 10 während deren Herstellung im Zuge der Extrusion erfolgen.

Alternativ ist es möglich, die Schwächungsbereiche 10a in ein bereits ausgeformtes Beschichtungsmaterial 10 einzubringen. Das Beschichtungsmaterial 10 bzw. die Trägerschicht 13 des Beschichtungsmaterials 10 kann dabei in einem teilweise oder vollständig ausgehärteten Zustand vorliegen.

Wenn das Beschichtungsmaterial 10 bzw. die Trägerschicht 13 bei Einprägung der Schwächungsbereiche 10a im teilweise ausgehärteten Zustand vorliegt, kann der Prägevorgang mit geringer Kraftaufbringung durchgeführt werden.

Falls der Prägevorgang durchgeführt wird, wenn das Beschichtungsmaterial 10 bzw. die Trägerschicht 13 bereits vollständig ausgehärtet sind, kann die Flexibilität erhöht werden, da das Beschichtungsmaterial 10 bspw. zwischengelagert, insbesondere aufgerollt, werden kann.

Eine weitere Möglichkeit besteht darin, den Schwächungsbereich 10a durch eine Porosierung, bevorzugt eine Mikroporosierung, einzubringen, die bspw. durch Behandlung mit einer mit der Trägerschicht 13 reagierenden Substanz erreicht wird.

Um die in Fig. 4 verbleibenden Hohlräume H11 und H12 weiter zu reduzieren, bevorzugt vollständig auszufüllen bzw. vollständig zu vermeiden, wird gemäß einem weiteren Beispiel, wie in Fig. 5 gezeigt, zusätzlich zu der Fase 30 an dem Werkstück W ein komplementärer Schwächungsbereich 10a an dem Beschichtungsmaterial 10 ausgebildet. Mit anderen Worten, anstatt den Schwächungsbereich 10a an dem Beschichtungsmaterial 10 in einer beliebigen Form auszubilden, wird dieser derart geformt, dass dieser nach Anbringung an das Werkstück W, also nach erfolgter Biegung des Beschichtungsmaterials 10 um den Übergangsabschnitt, zumindest annähernd komplementär zu der Fase 30 ist. Anhand dieser zweiten Ausführungsform ist es somit möglich, Hohlräume zwischen dem Beschichtungsmaterial 10 und dem Werkstück, die für gewöhnlich aufgrund der Schwächungsbereiche entstehen, noch besser zu reduzieren, im Idealfall vollständig zu vermeiden. Alternative besteht auch die Möglichkeit, die Fase 30 oder den gekrümmten Abschnitt im Übergangsabschnitt der zwei Werkstückseiten W1-W2 komplementär zu den bereits in dem Beschichtungsmaterial vorhandenen Schwächungsbereichen auszubilden. Wie der Fig. 5 ferner entnommen werden kann, besteht die Möglichkeit, einen Absatz 20 vorzusehen, dieser erleichtert die fertigungstechnische Verwirklichung der Fase 30 (bzw. des gekrümmten Abschnitts) und kann als Anschlag für das Beschichtungsmaterial dienen, um eine saubere Positionierung des Beschichtungsmaterials 10 auf dem Werkstück zu gewährleisten.

Fig. 6 zeigt eine Fasengeometrie einer Verbindungsecke (Gärung) gemäß dem Stand der Technik. Wie der Fig. 6 entnommen werden kann, weist die Gärung von Verbindungsecken bei bekannten Beschichtungsverfahren eine offene Gärungsfuge 100 auf, welche offen bleibt oder ggf. versiegelt wird. Was jedoch eine ansprechende, hochwertige Optik stört.

Fig. 7 zeigt eine Fasengeometrie einer Verbindungsecke (Gärung) gemäß einer Ausführungsform der vorliegenden Erfindung. Wie der Fig. 7 entnommen werden kann, ist die Geometrie des Profils nicht mehr rechtwinkelig wie im Stand der Technik sondern mit einer zusätzlichen Fase 30 versehen. Entsprechend weist nicht nur das Werkstück W im Übergangsabschnitt zwischen den zwei Werkstückseiten W1-W2 eine Fase 30 auf, sondern auch das Querbeschichtungsmaterial 101. Dies bietet den Vorteil, dass an den Verbindungsecken die Fasengeometrie der vorhandenen Querbeschichtung 101 mit der zusätzlichen Längsbeschichtung 102 übereinander liegen, ohne jegliche Profilerhöhung. Hiermit kann die Gärung optisch (vollständig) geschlossen werden. Es kann also eine störende Gärungsfuge vermieden werden.

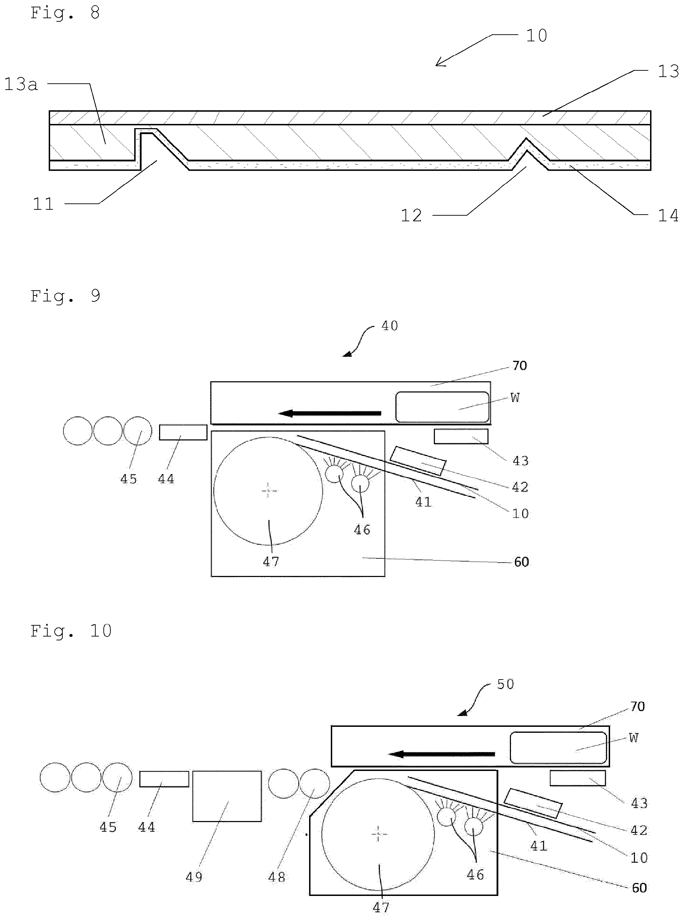

In Fig. 8 ist schematisch ein Querschnitt eines Beschichtungsmaterials 10, das beim erfindungsgemäßen Verfahren zum Einsatz kommen kann. Hierbei zeigt 12 einen herkömmlichen Schwächungsbereich in V-Form, wie es oftmals für Außenecken ausreichend ist. Die mit 11 gekennzeichnete Ausnehmung hingegen entspricht einem Schwächungsbereich 10a gemäß der zweiten Ausführungsform vorliegender Erfindung. Hier weist der Schwächungsbereich 11 beispielhaft eine Fase auf, die derart ausgebildet ist, dass sie nach Anbringung des Beschichtungsmaterials 10 an ein Werkstück W annähernd der Form der gemäß der ersten Ausführungsform der vorliegenden Erfindung an dem Werkstück W im Übergangsabschnitt angebrachten Fase 30 entspricht.

In Figur 9 wird eine Vorrichtung 40 zur Durchführung des erfindungsgemäßen Beschichtungsverfahrens gezeigt. Die Vorrichtung 40 umfasst eine erste Zuführeinrichtung 41, durch die ein an einem Werkstück W aufzubringendes Beschichtungsmaterial 10 geleitet wird. In einem nahe zu einer Andruckrolle 47 einer Fügeeinrichtung 60 gelegenen Bereich der Vorrichtung 40 sind im vorliegenden Beispiel zwei Energiequellen 46 vorgesehen, wobei in einer Modifikation der gezeigten Vorrichtung auch eine Energiequelle 46 oder mehrere Energiequellen 46 bereitgestellt werden können. Die zumindest eine Energiequelle 46 ist ausgewählt aus einem Laser, einer Heißluftquelle, einer Infrarotquelle, einer Ultraschallquelle, einer Magnetfeldquelle, einer Mikrowellenquelle, einer Plasmaquelle, LED-Quelle und/oder einer Begasungsquelle.

Des Weiteren umfasst die gezeigte Vorrichtung 40 eine Einrichtung 42 zum Einbringen des mindestens einen Schwächungsbereichs 10a in das Beschichtungsmaterial 10, wobei die Einrichtung 42 beispielhaft in Durchlaufrichtung des Beschichtungsmaterials 10 vor den zwei Energiequellen 46 angeordnet ist. Ferner weist die Vorrichtung 40 eine Trennvorrichtung 43 auf, die exemplarisch in Durchlaufrichtung des Werkstücks W vor der Andruckrolle 47 angeordnet ist. Hierbei wird das Werkstück W durch eine zweite Zuführeinrichtung 70 zugeführt. Die Trennvorrichtung 43 kann in die Vorrichtung 40 integriert sein, oder als eigenständige, vorgeschaltete Vorrichtung ausgebildet sein. Anhand der Trennvorrichtung 43 kann das Werkstück W derart trennend bearbeitet werden, dass der Schwächungsbereich 10a des Beschichtungsmaterials 10, der nach Aufbringen des Beschichtungsmaterials 10 an das Werkstück im Übergangsabschnitt positioniert ist, zumindest teilweise ausgefüllt wird.

In Durchlaufrichtung des Beschichtungsmaterials 10 nachrangig umfasst die Vorrichtung 40 ferner eine Verformstrecke 44, in der ein weiterer Verformschritt nach Aufbringung des Beschichtungsmaterials 10 an einem Werkstück durchgeführt wird, sowie zumindest eine Anpressrolle 45, mit der während der Aushärtung der Haftmittelschicht (Haftschicht 14) des an einem Werkstück W angehefteten Beschichtungsmaterials 10 weiterhin ein Anpressdruck aufgebracht wird.

In Figur 10 wird eine alternative Vorrichtung 50 zur Durchführung des erfindungsgemäßen Beschichtungsverfahrens gezeigt. Die in Figur 10 gezeigte Vorrichtung 50 unterscheidet sich dahingehend von der unter Bezugnahme auf Figur 9 beschriebenen Vorrichtung 40, dass die Vorrichtung 50 weitere Anpressrollen 48, die benachbart zur Andruckrolle 47 angeordnet sind, sowie eine Nachbearbeitungsstation 49 aufweist, die zwischen den weiteren Anpressrollen 48 und der Verformstrecke 44 angeordnet ist.

## Patentansprüche

1. Verfahren zur Beschichtung unsteter Oberflächen eines Werkstücks (W), das bevorzugt zumindest abschnittsweise aus Holz, Holzwerkstoffen oder Holzersatzwerkstoffen besteht, mit den Schritten:
Zuführen eines Beschichtungsmaterials (10), wobei das Beschichtungsmaterial (10) zumindest einen Schwächungsbereich (10a) umfasst,
Aufbringen des Beschichtungsmaterials (10) an mindestens zwei Werkstückseiten (W1-W2), welche insbesondere winklig zueinander angeordnet sind, wobei der zumindest eine Schwächungsbereich (10a) im Übergangsabschnitt der mindestens zwei Werkstückseiten (W1-W2), insbesondere im Bereich einer Innenecke, positioniert wird, und wobei der Übergangsabschnitt der mindestens zwei Werkstückseiten (W1-W2) derart ausgestaltet ist, um den Schwächungsbereich (10a) des Beschichtungsmaterials (10) zumindest teilweise auszufüllen,
**dadurch gekennzeichnet, dass** eine Verbindungsecke des Werkstücks (W) anhand von zwei Beschichtungsmaterialien (10), insbesondere anhand einer Längsbeschichtung (102) und einer Querbeschichtung (101), beschichtet wird, wobei
die Verbindungsecke eine Längsseite und eine Querseite aufweist, die bevorzugt rechtwinkelig zueinander angeordnet sind, und jeweils mindestens zwei Werkstückseiten (W1, W2, W3) aufweisen, welche insbesondere rechtwinkelig zueinander angeordnet sind, dass eine der beiden Werkstückseiten (W2) der Querseite identisch ist mit einer der beiden Werkstückseiten (W2) der Längsseite,
mindestens ein Übergangsabschnitt (110) der beiden Seiten mit einer Fase und/oder einem gekrümmten Abschnitt ausgebildet ist, insbesondere einer Fase im Winkel von 45°, und
beide Beschichtungsmaterialien (101, 102), in der Verlängerung des Übergangsabschnitts (110) derart eine komplementäre Fase und/oder einen gekrümmten Abschnitt aufweisen, dass sie ohne Profilerhöhung übereinander liegen.

2. Verfahren gemäß Anspruch 1, **dadurch gekennzeichnet, dass** der Übergangsabschnitt eine Fase (30) und/oder einen gekrümmten Abschnitt mit einem Absatz.

3. Verfahren gemäß Anspruch 2, **dadurch gekennzeichnet, dass** die Größe der Fase und/oder des gekrümmten Abschnitts von der Dicke des Beschichtungsmaterials abhängt.

4. Verfahren gemäß einem der vorangegangenen Ansprüche, **dadurch gekennzeichnet, dass** der zumindest eine Schwächungsbereich (10a) eine Aussparung ist, die im Querschnitt des Beschichtungsmaterials (10) betrachtet insbesondere v-förmig, w-förmig, rechtwinklig oder halbkreisförmig ausgeformt ist, und/oder der Schwächungsbereich (10a) durch eine Vielzahl von Schlitzen oder Sacklöchern im Beschichtungsmaterial (10) ausgebildet ist, wobei der Schwächungsbereich (10a) insbesondere zumindest annähernd komplementär zu dem Übergangsabschnitt ausgebildet ist.

5. Verfahren gemäß einem der vorangegangenen Ansprüche, **dadurch gekennzeichnet, dass** eine Trägerschicht (13) des Beschichtungsmaterials (10) zumindest abschnittsweise aus PVC, Polystyrol, insbesondere aus ABS, aus PP, PE, Polycarbonat und/oder Polymethylmetacrylat (PMMA), als HPL, CPL, Melaminpapier und/oder als Furnier ausgebildet ist.

6. Verfahren gemäß einem der vorangegangenen Ansprüche, **dadurch gekennzeichnet, dass** das Beschichtungsmaterial (10) eine Dicke zwischen 0,5mm - 4 mm, bevorzugt 0,7-4 mm, weiter bevorzugt 1,5 mm - 4 mm, aufweist, wobei eine Haftschicht (14) insbesondere eine Dicke von 0,1 - 0,3 mm aufweist.

7. Verfahren nach Anspruch 6, **dadurch gekennzeichnet, dass** die Haftschicht (14) des Beschichtungsmaterials (10) Farbpigmente aufweist und bevorzugt dieselbe Farbe besitzt wie die Trägerschicht (13) .

8. Verfahren gemäß einem der vorangegangenen Ansprüche, bei dem der zumindest eine Schwächungsbereich (10a) während des Zuführens des Beschichtungsmaterials (10) und/oder während des Aufbringens des Beschichtungsmaterials (10) am Werkstück (W) eingebracht wird.

9. Verfahren gemäß einem der vorangegangenen Ansprüche, bei dem das Beschichtungsmaterial (10) eine Trägerschicht (13) und eine Haftschicht (14) aufweist, wobei der zumindest eine Schwächungsbereich (10a) vor Aufbringen der Haftschicht (14) an der Trägerschicht (13) oder nach Aufbringen der Haftschicht (14) an der Trägerschicht (13) eingebracht wird.

10. Bauelement mit Beschichtung, insbesondere eine Türe, das bevorzugt zumindest abschnittsweise aus Holz, Holzwerkstoffen oder Holzersatzwerkstoffen besteht, wobei das Bauelement insbesondere unter Verwendung des Verfahrens nach einem der Ansprüche 1 bis 10 beschichtet wurde, umfassend:
ein Beschichtungsmaterial (10) mit mindestens einem Schwächungsbereich (10a),
mindestens zwei Werkstückseiten (W1-W2), welche insbesondere winklig zueinander angeordnet sind, wobei der zumindest eine Schwächungsbereich (10a) in einem Übergangsabschnitt der mindestens zwei Werkstückseiten (W1-W2), insbesondere im Bereich einer Innenecke, positioniert ist, und wobei der Übergangsabschnitt der mindestens zwei Werkstückseiten (W1-W2) derart ausgestaltet ist, dass der Schwächungsbereich (10a) des Beschichtungsmaterials (10) zumindest teilweise ausgefüllt ist,
**dadurch gekennzeichnet, dass** eine Verbindungsecke des Werkstücks (W) anhand von zwei Beschichtungsmaterialien (10), insbesondere anhand einer Längsbeschichtung (102) und einer Querbeschichtung (101), beschichtet wird, wobei
die Verbindungsecke eine Längsseite und eine Querseite aufweist, die bevorzugt rechtwinkelig zueinander angeordnet sind, und jeweils mindestens zwei Werkstückseiten (W1, W2, W3) aufweisen, welche insbesondere rechtwinkelig zueinander angeordnet sind, dass eine der beiden Werkstückseiten (W2) der Querseite identisch ist mit einer der beiden Werkstückseiten (W2) der Längsseite,
mindestens ein Übergangsabschnitt (110) der beiden Seiten mit einer Fase und/oder einem gekrümmten Abschnitt ausgebildet ist, insbesondere einer Fase im Winkel von 45°, und
beide Beschichtungsmaterialien (101, 102), in der Verlängerung des Übergangsabschnitts (110) derart eine komplementäre Fase und/oder einen gekrümmten Abschnitt aufweisen, dass sie ohne Profilerhöhung übereinander liegen.

## Claims

1. Method of covering non-planar surfaces of a workpiece (W) of which at least a portion or portions are preferably of wood, engineered wood or wood-substitute materials, having the following steps:
infeed of a covering material (10), the covering material (10) comprising at least one weakened region (10a),
application of the covering material (10) to at least two faces (W1-W2) of the workpiece which are, in particular, arranged at an angle to one another, the at least one weakened region (10a) being positioned in the transitional area between the at least two faces (W1-W2) of the workpiece, and in particular in the region of an inside corner, and the transitional area between the at least two faces (W1-W2) of the workpiece being so formed as to at least partly fill the weakened region (10a) of the covering material (10),
**characterised in that** a connecting corner of the workpiece (W) is covered by means of two covering materials (10) and in particular by means of a longitudinal covering (102) and a transverse covering (101), the connecting corner having a longitudinal side and a transverse side which are preferably arranged at right angles to one another, and which each have at least two faces (W1, W2, W3) of the workpiece which are, in particular, arranged at right angles to one another, and **in that** one (W2) of the two workpiece faces on the transverse side is identical to one (W2) of the two workpiece faces on the longitudinal side,
at least one transitional area (110) between the two faces being formed to have a bevel and/or a curved portion, and in particular a bevel at an angle of 45°, and
the two covering materials (101, 102) having, on an extension of the transitional area (110), a complementary bevel and/or a curved portion such that they lie one on top of the other without there being any increase in height in profile.

2. Method according to claim 1, **characterised in that** the transitional area has a bevel (30) and/or a curved portion, having an end-step.

3. Method according to claim 2, **characterised in that** the size of the bevel and/or of the curved portion depends on the thickness of the covering material.

4. Method according to one of the preceding claims, **characterised in that** the at least one weakened region (10a) is a recess which, when the covering material (10) is seen in cross-section, is, in particular, of a V-shaped, W-shaped, right-angled or semi-circular form, and/or the weakened region (10a) is formed by a plurality of slots or blind holes in the covering material (10), the weakened region (10a) being of a form which is, in particular, at least approximately complementary to the transitional area.

5. Method according to one of the preceding claims, **characterised in that** at least a portion or portions of the support layer (13) of the covering material (10) are formed from PVC, polystyrene and in particular ABS, from PP, PE, polycarbonate and/or polymethyl methacrylate (PMMA), from HPL, CPL, melamine paper and/or from veneer.

6. Method according to one of the preceding claims, **characterised in that** the covering material (10) is of a thickness of between 0.5 mm and 4 mm, and preferably between 0.7 and 4 mm, and as a further preference of between 1.5 mm and 4 mm, with an adhesive layer (14) being, in particular, of a thickness of 0.1 - 0.3 mm.

7. Method according to claim 6, **characterised in that** the adhesive layer (14) of the covering material (10) has coloured pigments and is preferably of the same colour as the support layer (13).

8. Method according to one of the preceding claims, in which the at least one weakened region (10a) is produced during the infeed of the covering material (10) and/or during the application of the covering material (10) to the workpiece (W).

9. Method according to one of the preceding claims, in which the covering material (10) has a support layer (13) and an adhesive layer (14), the at least one weakened region (10a) being produced before the application of the adhesive layer (14) to the support layer (13) or after the application of the adhesive layer (14) to the support layer (13) .

10. Constructional element, and in particular a door, which has a covering and of which at least a portion or portions preferably comprise wood, engineered wood or wood-substitute materials, the constructional element having been covered in particular by the use of the method according to one of claims 1 to 10, comprising:
a covering material (10) having at least one weakened region (10a),
at least two workpiece faces (W1-W2) which are, in particular, arranged at an angle to one another, the at least one weakened region (10a) being positioned in a transitional area between the at least two workpiece faces (W1-W2), and in particular in the region of an inside corner, and the transitional area between the at least two workpiece faces (W1-W2) being of a form such that the weakened region (10a) of the covering material (10) is at least partly filled,
**characterised in that** a connecting corner of the workpiece (W) is covered by means of two covering materials (10), and in particular by means of a longitudinal covering (102) and a transverse covering (101),
the connecting corner having a longitudinal side and a transverse side which are preferably arranged at right angles to one another, and which each have at least two workpiece faces (W1, W2, W3) which are, in particular, arranged at right angles to one another, and **in that** one (W2) of the two workpiece faces on the transverse side is identical to one (W2) of the two workpiece faces on the longitudinal side,
at least one transitional area (110) between the two faces being formed to have a bevel and/or a curved portion and in particular a bevel at an angle of 45°, and
the two covering materials (101, 102) having, on an extension of the transitional area (110), a complementary bevel and/or a curved portion such that they lie one on top of the other without there being any increase in height in profile.

## Revendications

1. Procédé de revêtement de surfaces précaires d'une pièce d'oeuvre (W) qui est constituée de manière préférée au moins par sections de bois, de matériaux à base de bois ou de matériaux de substitution du bois, comprenant les étapes suivantes consistant à :
fournir un matériau de revêtement (10), dans lequel le matériau de revêtement (10) comprend au moins une région à affaiblissement (10a),
appliquer le matériau de revêtement (10) sur au moins deux côtés de pièce d'oeuvre (W1-W2), en particulier agencés de manière à présenter un angle l'un par rapport à l'autre, dans lequel l'au moins une région à affaiblissement (10a) est positionnée dans la section de transition des au moins deux côtés de pièce d'oeuvre (W1-W2), en particulier dans la région d'un coin intérieur, et dans lequel la section de transition des au moins deux côtés de pièce d'oeuvre (W1-W2) est conçue de manière à combler au moins partiellement la région à affaiblissement (10a) du matériau de revêtement (10),
**caractérisé en ce qu'**un coin de raccordement de la pièce d'oeuvre (W) est revêtu en utilisant deux matériaux de revêtement (10), en particulier en utilisant un revêtement longitudinal (102) et un revêtement transversal (101), dans lequel
le coin de raccordement présente un côté longitudinal et un côté transversal, qui sont agencés de manière préférée perpendiculairement l'un à l'autre et présentent respectivement au moins deux côtés de pièce d'oeuvre (W1, W2, W3) qui sont agencés en particulier perpendiculairement l'un à l'autre, **en ce que** l'un des deux côtés de pièce d'oeuvre (W2) du côté transversal est identique à l'un des deux côtés de pièce d'oeuvre (W2) du côté longitudinal,
au moins une section de transition (110) des deux côtés est formée avec un chanfrein et/ou une section incurvée, en particulier un chanfrein faisant un angle de 45°, et
les deux matériaux de revêtement (101, 102) présentent dans le prolongement de la section de transition (110) un chanfrein et/ou une section incurvée complémentaire tels qu'ils se superposent sans rehaussement de profil.

2. Procédé selon la revendication 1, **caractérisé en ce que** la section de transition présente un chanfrein (30) et/ou une section incurvée avec une marche.

3. Procédé selon la revendication 2, **caractérisé en ce que** la taille du chanfrein et/ou de la section incurvée dépend de l'épaisseur du matériau de revêtement.

4. Procédé selon l'une quelconque des revendications précédentes, **caractérisé en ce que** l'au moins une région à affaiblissement (10a) est un évidement qui, vu en coupe transversale du matériau de revêtement (10), est en particulier en forme de V, de W, de rectangle ou de demi-cercle, et/ou la région à affaiblissement (10a) est formée d'une pluralité de fentes ou de trous borgnes dans le matériau de revêtement (10), dans lequel la région à affaiblissement (10a) est réalisée en particulier de manière au moins approximativement complémentaire à la section de transition.

5. Procédé selon l'une quelconque des revendications précédentes, **caractérisé en ce qu'**une couche de support (13) du matériau de revêtement (10) est réalisée au moins par sections en PVC, en polystyrène, en particulier en ABS, en PP, PE, polycarbonate et/ou polyméthacrylate de méthyle (PMMA), sous forme de stratifié HPL, de stratifié CPL, de mélaminé et/ou de placage.

6. Procédé selon l'une quelconque des revendications précédentes, **caractérisé en ce que** le matériau de revêtement (10) présente une épaisseur comprise entre 0,5 mm et 4 mm, de préférence comprise entre 0,7 et 4 mm, plus préférentiellement entre 1,5 et 4 mm, dans lequel une couche adhésive (14) présente en particulier une épaisseur comprise entre 0,1 et 0,3 mm.

7. Procédé selon la revendication 6, **caractérisé en ce que** la couche adhésive (14) du matériau de revêtement (10) présente des pigments de couleur et a de préférence la même couleur que la couche de support (13).

8. Procédé selon l'une quelconque des revendications précédentes, dans lequel l'au moins une région à affaiblissement (10a) est mise en place pendant la fourniture du matériau de revêtement (10) et/ou pendant l'application du matériau de revêtement (10) sur la pièce d'oeuvre (W).

9. Procédé selon l'une quelconque des revendications précédentes, dans lequel le matériau de revêtement (10) présente une couche de support (13) et une couche adhésive (14), dans lequel l'au moins une région à affaiblissements (10a) est mise en place avant l'application de la couche adhésive (14) sur la couche de support (13) ou après l'application de la couche adhésive (14) sur la couche de support (13).

10. Élément de structure, en particulier une porte, muni d'un revêtement constitué de préférence au moins par sections de bois, de matériaux à base de bois ou de matériaux de substitution du bois, dans lequel l'élément de structure a été revêtu en particulier à l'aide du procédé selon l'une quelconque des revendications 1 à 10, comprenant :
un matériau de revêtement (10) muni d'au moins une région à affaiblissement (10a),
au moins deux côtés de pièce d'oeuvre (W1-W2), en particulier agencés de manière à présenter un angle l'un par rapport à l'autre, dans lequel l'au moins une région à affaiblissement (10a) est positionnée dans la section de transition des au moins deux côtés de pièce d'oeuvre (W1-W2), en particulier dans la région d'un coin intérieur, et dans lequel la section de transition des au moins deux côtés de pièce d'oeuvre (W1-W2) est conçue de manière à ce que la région à affaiblissement (10a) du matériau de revêtement (10) soit au moins partiellement comblée,
**caractérisé en ce qu'**un coin de raccordement de la pièce d'oeuvre (W) est revêtu en utilisant deux matériaux de revêtement (10), en particulier en utilisant un revêtement longitudinal (102) et un revêtement transversal (101), dans lequel
le coin de raccordement présente un côté longitudinal et un côté transversal, qui sont agencés de manière préférée perpendiculairement l'un à l'autre et présentent respectivement au moins deux côtés de pièce d'oeuvre (W1, W2, W3) qui sont agencés en particulier perpendiculairement l'un à l'autre,
**en ce que** l'un des deux côtés de pièce d'oeuvre (W2) du côté transversal est identique à l'un des deux côtés de pièce d'oeuvre (W2) du côté longitudinal,
au moins une section de transition (110) des deux côtés est formée avec un chanfrein et/ou une section incurvée, en particulier un chanfrein formant un angle de 45°, et
les deux matériaux de revêtement (101, 102) présentent dans le prolongement de la section de transition (110) un chanfrein et/ou une section incurvée complémentaire tels qu'ils se superposent sans rehaussement de profil.
